# EUROPÄISCHE PATENTSCHRIFT

(11) **EP 2 341 997 B1**
(45) Veröffentlichungstag und Bekanntmachung des Hinweises auf die Patenterteilung: **08.01.2014**
(21) Anmeldenummer: 09736188.5
(22) Anmeldetag: 08.10.2009
(51) Int. Cl.: B01D 27/08, B01D 27/10

(54) **SPIN-ON-WECHSELFILTER FÜR FLÜSSIGKEITEN**
SPIN-ON EXCHANGEABLE FILTERS FOR LIQUIDS
FILTRE SPIN-ON INTERCHANGEABLE POUR LIQUIDES

(30) Priorität: 08.10.2008 DE 102008050448
(43) Veröffentlichungstag der Anmeldung: 13.07.2011
(73) Patentinhaber: Mann + Hummel GmbH, 71638 Ludwigsburg (DE); Parker Hannifin GmbH&Co. Kg, 74385 Pleidelsheim (DE)
(72) Erfinder: THIENEL, Michael, 95349 Thurnau (DE); ERMERT, Sixten, 74354 Besigheim (DE)
(74) Vertreter: Seyboth, Matthias
(86) Internationale Anmeldenummer: PCT/EP2009/063082
(87) Internationale Veröffentlichungsnummer: WO 2010/040797

(56) Entgegenhaltungen:
- EP-A2- 1 671 690
- DE-U1-202005 007 871
- FR-A1- 2 226 199
- US-A1- 2003 205 521

## Beschreibung

### Technisches Gebiet

Die Erfindung betrifft einen Spin-On-Wechselfilter für Flüssigkeiten nach den Merkmalen des unabhängigen Anspruches 1.

### Stand der Technik

Spin-On-Wechselfilter dienen zur Reinigung von Schmieröl einer Brennkraftmaschine und weisen üblicherweise eine Anschlussplatte auf, die mit einer Dichtung zum Anschließen einer Aufnahmestruktur einer Brennkraftmaschine versehen ist. An der Anschlussplatte ist ein Gehäuse befestigt, in welchem sich ein Filterelement in Form eines zickzackförmig gefalteten Filtermediums befindet, das auf einem Mittelrohr befestigt wird. Das zu reinigende Öl strömt über Kanäle an der Befestigungsplatte in den Wechselfilter ein, wird dort durch das Filtermedium geleitet und verlässt üblicherweise über eine Hohlschraube den Wechselfilter und strömt in die Brennkraftmaschine zurück. Damit beim Stillstand eines Fahrzeuges das Filterelement nicht leerläuft, sind die Zuströmkanäle üblicherweise mit einer Rücklaufsperrmembran verschlossen. Diese Rücklaufsperrmembran hat die Aufgabe, einerseits während der Reinigung des Öls den Ölstrom ungehindert in das Filterelement einströmen zu lassen, andererseits während des Stillstandes des Fahrzeuges die Einströmöffnungen zuverlässig zu verschließen.

Aus der GB 1 418 394 ist ein Wechselfilter zu entnehmen, der an seiner Endplatte mit einem Rückschlagsperrventil ausgestattet ist. Dieses Rückschlagsperrventil ist über eine Metallendscheibe des Filterelements fixiert. Die FR 2 226 199 A1, die DE 20 2005 007 871 U1 und die EP 1 671 690 A2 beschreiben einen Spin-On-Wechselfilter mit einem topfförmigen Gehäuse, das durch einen Deckel verschlossen ist. Der Deckel ist mit einer Außendichtung versehen, mittels derer der Spin-On-Wechselfilter an einer Anlagefläche dichtend anliegt. Die ringförmige Außendichtung ist in einer Aufnahmenut an dem Deckel befestigt.

Der US 2003/205521 A1 ist ein Spin-On-Wechselfilter zu entnehmen, bei welchem eine Außendichtung in eine deckelseitige Aufnahme eingespritzt ist.

Ein Nachteil bei den bisher bekannten Systemen besteht darin, dass die Anschlussplatte ein aufwendiges Bauteil ist, das in mehreren Bearbeitungsgängen hergestellt werden muss und der Verschluss der Kanäle aufwendig gestaltete Dichtungssysteme erfordert, die an die Anschlussplatte montiert werden müssen.

Der Erfindung liegt die Aufgabe zugrunde, die genannten Nachteile zu vermeiden und einen Spin-On-Wechselfilter zu schaffen, der einfach aufgebaut ist und die Filtrationsfunktion zuverlässig erfüllt.

Diese Aufgabe wird durch die Merkmale des unabhängigen Anspruches 1 gelöst.

### Offenbarung der Erfindung

Der wesentliche Vorteil der Erfindung ist darin zu sehen, dass an einer Deckelplatte Öffnungen zum Zuströmen der zu reinigenden Flüssigkeit vorgesehen ist und eine Sperrmembran zwischen der Deckelplatte und einem Grundkörper angeordnet ist, die ein Zurückströmen der zugeführten Flüssigkeit verhindert. Ferner ist die Dichtung für die Abdichtung der Deckelplatte an einer Anschlussstruktur im Zweikomponentenspritzgießverfahren hergestellt, so dass eine aufwendige Montage entfällt.

Weiterbildungsgemäß besteht die Sperrmembran aus einem Elastomerwerkstoff, der entweder in die Deckelplatte eingeknüpft, eingeklebt oder im 2K-Verfahren angespritzt ist.

Eine weitere Ausgestaltung der Erfindung sieht vor, die Sperrmembran im Wesentlichen als planen Ring auszubilden, der eine konzentrische Öffnung aufweist. Diese konzentrische Öffnung ist derart gestaltet, dass sie formschlüssig an der Anschlussfläche der Deckelplatte anliegt.

Die Deckelplatte ist weiterbildungsgemäß mit dem Grundkörper verschweißt oder verklebt. Beide Teile bestehen bevorzugt aus einem thermoplastischen Kunststoffmaterial.

Zur Zentrierung zwischen Deckelplatte und Grundkörper kann in vorteilhafter Weise eine Nutverbindung zwischen den Teilen angeordnet sein.

Diese und weitere Merkmale gehen nicht nur aus den Ansprüchen, sondern auch aus der Beschreibung und den Zeichnungen hervor.

### Kurze Beschreibung der Zeichnungen

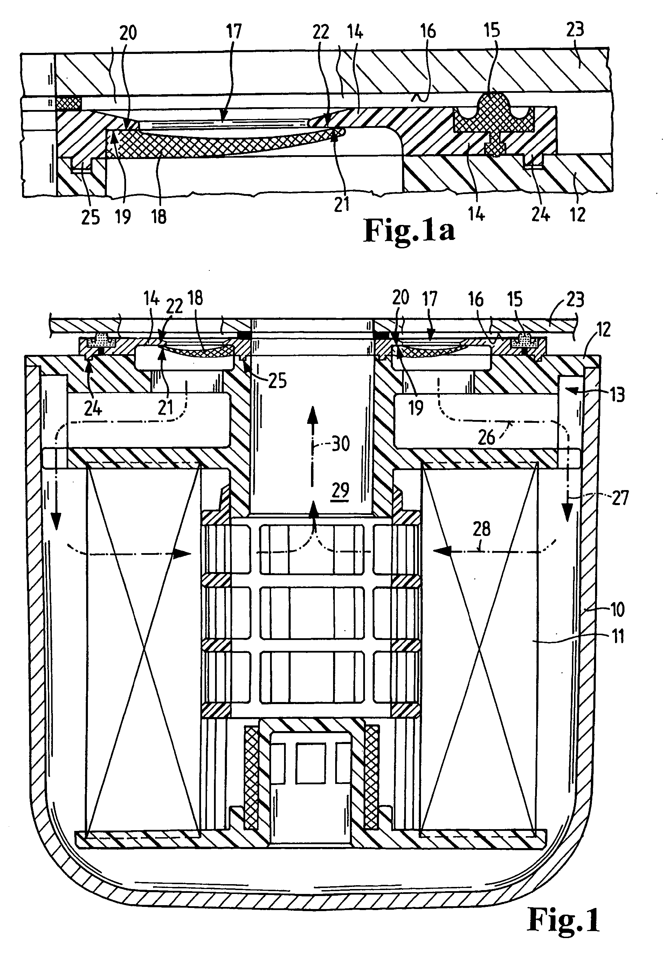

Die Erfindung wird nachfolgend anhand von Zeichnungen gemäß Fig. 1 und Fig. 1a näher erläutert. Sie zeigen die Schnittdarstellung eines Spin-On-Wechselfilters.

### Ausführungsform(en) der Erfindung

Die Figur 1 zeigt in einem Schnitt die Gesamtansicht eines Spin-On-Wechselfilters und oberhalb dieser Figur einen Ausschnitt mit vergrößerter Darstellung (Fig. 1 a) einer Sperrmembran 18 an einer Deckelplatte 14. An einer Anlagefläche 16, d. h. beispielsweise einer Anschlussplatte 23 einer Brennkraftmaschine, wird der Spin-On-Wechselfilter üblicherweise mit einer Hohlschraube, die hier nicht dargestellt ist, angeschraubt. Der Wechselfilter besteht aus einem Gehäuse 10, das topfförmig gestaltet ist und in dem sich ein Filterelement 11 befindet. Das Gehäuse 10 wird abgeschlossen mit einem Deckel 12, der aus einem Grundkörper 13 und einer Deckelplatte 14 besteht. Der Grundkörper 13 hat - wie auch die Deckelplatte 14 - Zulauföffnungen 17 zum Einströmen des zu reinigenden Öls. Die Zulauföffnungen sind über den Umfang verteilt angeordnet und werden mit einer Sperrmembran 18 abgedeckt. Die Sperrmembran 18 befindet sich mit ihrer Anlagefläche 20 an einer Anschlussfläche 19. Diese Verbindung ist flüssigkeitsdicht ausgeführt. Aufgrund ihrer Krümmung liegt die Sperrmembran 18 ferner mit einer ringförmigen Dichtfläche 21 an einer Dichtfläche 22 der Deckelplatte 14 an, so dass Flüssigkeit, die sich in dem Gehäuse 10 befindet, nicht über die Öffnungen 17 abströmen kann. Andererseits aber kann Flüssigkeit durch die Öffnungen 17 in das Gehäuse 10 einströmen, da es sich bei der Sperrmembran 18 um ein Elastomermaterial handelt.

In der vergrößerten Darstellung Fig. 1a oberhalb des Gesamtsystems ist die Sperrmembran 18 nochmals gezeigt. Gleichzeitig ist dort auch die Außendichtung 15 erkennbar. Diese wird im 2K-Spritzgießverfahren in die Deckelplatte 14 gebettet. Die obere Wölbung stellt die Dichtung zu der Anlagefläche 16 dar und sorgt dafür, dass keine Flüssigkeit zwischen Anlagefläche 16 und Spin-On-Wechselfilter austreten kann. Die Verbindung zwischen der Deckelplatte 14 und dem Grundkörper 13 erfolgt mittels Kleben oder Verschweißen. Zur Fixierung der beiden Teile miteinander befinden sich an der Deckelplatte 14 ein erster umlaufender Kragen 24 und ein zweiter umlaufender Kragen 25, die jeweils in eine Nut an dem Grundkörper 13 eingreifen. Die Flüssigkeit, welche über die Öffnungen 17 einströmt, gelangt gemäß Pfeil 26 und Pfeil 27 in den äußeren Bereich des Filterelementes 11, durchströmt dieses Filterelement gemäß Pfeil 28 und verlässt gereinigt das Gehäuse 10 über die Öffnung 29 gemäß Pfeil 30.

## Patentansprüche

1. Spin-On-Wechselfilter für Flüssigkeiten, bestehend aus einem Gehäuse (10), welches topfförmiges gestaltet ist, einem in dem Gehäuse (10) angeordneten Filterelement (11), welches im Wesentlichen aus einem zickzackförmig gefalteten, an den Stirnseiten verschlossenen Filtermedium besteht sowie einem das Gehäuse (10) verschließenden Deckel (12), der aus einem Grundkörper (13) und einer Deckelplatte (14) besteht und wobei die Deckelplatte (14) eine Außendichtung (15) aufweist, die in Verbindung mit einer Anlagefläche (16) für den Spin-On-Wechselfilter die Abdichtung zwischen dem Wechselfilter und der Anlagefläche (16) bewirkt, wobei die Deckelplatte (14) Öffnungen (17) zum Zuströmen der zu reinigenden Flüssigkeit aufweist und diese Öffnungen (17) im Wesentlichen derart konzentrisch in der Deckelplatte (14) angeordnet sind, dass die Öffnungen (17) über den Umfang verteilt angeordnet sind, und wobei diese Öffnungen (17) durch eine zwischen der Deckelplatte (14) und dem Grundkörper (13) angeordnete Sperrmembran (18) derart geschlossen sind, dass ein Zuströmen der zu filternden Flüssigkeit das Öffnen der Sperrmembran (18) bewirkt und ein Rückströmen der zugeführten Flüssigkeit durch eine Abdichtung der Sperrmembran (18) der konzentrischen Öffnungen (17) verhindert wird, **dadurch gekennzeichnet, dass** diese Außendichtung (15) im Zweikomponentenspritzgießverfahren in die Deckelplatte (14) eingebettet ist.

2. Spin-On-Wechselfilter nach Anspruch 1, **dadurch gekennzeichnet, dass** die Sperrmembran aus einem Elastomerwerkstoff besteht, der in die Deckelplatte (14) eingeknüpft, eingeklebt oder im 2K-Verfahren angespritzt ist.

3. Spin-On-Wechselfilter nach Anspruch 1 oder 2, **dadurch gekennzeichnet, dass** die Deckelplatte (14) eine konzentrische Anschlussfläche (19) aufweist, die durch eine konzentrische Anlagefläche (20) abgeschlossen wird und die Sperrmembran im Wesentlichen als planer Ring ausgebildet ist, der eine konzentrische Öffnung aufweist und diese konzentrische Öffnung derart gestaltet ist, dass sie formschlüssig an der Anschlussfläche (19) und der Anlagefläche (20) dichtend anliegt.

4. Spin-On-Wechselfilter nach Anspruch 3, **dadurch gekennzeichnet, dass** die Sperrmembran am Umfangsbereich eine Dichtfläche aufweist, die an einer korrespondierenden Dichtfläche der Deckelplatte (14) anliegt.

5. Spin-On-Wechselfilter nach einem der vorherigen Ansprüche, **dadurch gekennzeichnet, dass** die Deckelplatte (14) mit dem Grundkörper (13) verschweißt oder verklebt ist und beide Teile aus einem thermoplastischen Kunststoffmaterial bestehen.

6. Spin-On-Wechselfilter nach Anspruch 5, **dadurch gekennzeichnet, dass** zur Zentrierung zwischen Deckelplatte (14) und Grundkörper (13) wenigstens eine umlaufende Nutverbindung zwischen den Teilen angeordnet ist.

## Claims

1. Spin-on filter for liquids, consisting of a housing (10) which has a pot-shaped design, a filter element (11) disposed in the housing (10) which consists substantially of a zigzag-folded filter medium closed on the front faces as well as of a cover (12) closing the housing (10) which consists of a base body (13) and a cover plate (14) and the cover plate (14) featuring an external gasket (15) which causes, in connection with a contact area (16) for the spin-on filter, the sealing between the spin-on filter and the contact area (16), the cover plate (14) featuring openings (17) for allowing the liquid to be cleaned to enter and these openings (17) being substantially disposed concentrically in the cover plate (14) in such a way that the openings (17) are spread over the circumference, and these openings (17) being closed by a stop membrane (18) disposed between the cover plate (14) and the base body (13) in such a way that the stop membrane (18) is opened when the liquid to be filtered enters and a return flow of the supplied liquid is avoided by a sealing of the stop membrane (18) of the concentric openings (17), **characterized in that** this external gasket (15) is embedded in the cover plate (14) by means of the two-component injection molding technology.

2. Spin-on filter according to claim 1, **characterized in that** the stop membrane consists of an elastomer material which is attached to, glued or injection molded by the two-component injection molding technology in the cover plate (14).

3. Spin-on filter according to claim 1 or 2, **characterized in that** the cover plate (14) features a concentric connection area (19) which is closed by a concentric contact area (20) and that the stop membrane is substantially designed as plane ring which features a concentric opening and that this concentric opening is designed in such a way that it sealingly contacts the connection area (19) and the contact area (20) in a positive fitting.

4. Spin-on filter according to claim 3, **characterized in that** the stop membrane features a sealing surface at the circumferential area which contacts a corresponding sealing surface of the cover plate (14).

5. Spin-on filter according to one of the above claims, **characterized in that** the cover plate (14) is welded or glued with the base body (13) and that both parts consists of a thermoplastic synthetic material.

6. Spin-on filter according to claim 5, **characterized in that** for centering between cover plate (14) and base body (13) at least one circumferential groove is disposed between the parts.

## Revendications

1. Filtre interchangeable spin-on pour liquides, composé d'un boîtier (10) exécuté en forme de pot, d'un élément filtrant (11) placé dans le boîtier (10) qui est essentiellement constitué d'un milieu filtrant plié en accordéon et fermé au niveau des faces frontales et d'un couvercle (12) obturant le boîtier (10) qui se compose d'un corps de base (13) et d'une plaque-couvercle (14), la plaque-couvercle (14) étant pourvue d'un joint extérieur (15) qui, en combinaison avec une surface de contact (16) pour le filtre interchangeable spin-on, assure l'étanchéité entre le filtre interchangeable et la surface de contact (16), la plaque-couvercle (14) présentant des ouvertures (17) pour faire entrer le liquide à nettoyer et ces ouvertures (17) étant essentiellement disposées de manière concentrique dans la plaque-couvercle (14) de sorte que les ouvertures (17) soient réparties sur la circonférence, et ces ouvertures (17) étant fermées par une membrane d'arrêt (18) placée entre la plaque-couvercle (14) et le corps de base (13) de manière à ce qu'une arrivée du liquide à filtrer provoque l'ouverture de la membrane d'arrêt (18) et qu'un retour du liquide amené soit empêché par une étanchéité de la membrane d'arrêt (18) des ouvertures concentriques (17), **caractérisé en ce que** ce joint extérieur (15) est incorporé dans la plaque-couvercle (14) selon un procédé de moulage par injection à deux composants.

2. Filtre interchangeable spin-on selon la revendication 1, **caractérisé en ce que** la membrane d'arrêt est constituée d'un matériau élastomère qui est lié, collé ou injecté selon un procédé à deux composants dans la plaque-couvercle (14).

3. Filtre interchangeable spin-on selon la revendication 1 ou 2, **caractérisé en ce que** la plaque-couvercle (14) présente une surface de raccordement (19) concentrique qui se termine par une surface de contact (20) concentrique et que la membrane d'arrêt est essentiellement exécutée en tant que bague plane qui présente une ouverture concentrique et que cette ouverture concentrique est réalisée de manière ce qu'elle soit appliquée de manière étanche, par complémentarité de forme, sur la surface de raccordement (19) et la surface de contact (20).

4. Filtre interchangeable spin-on selon la revendication 3, **caractérisé en ce que** la membrane d'arrêt présente sur la partie circonférentielle une surface d'étanchéité qui est appliquée sur une surface d'étanchéité correspondante de la plaque-couvercle (14).

5. Filtre interchangeable spin-on selon l'une des revendications précédentes, **caractérisé en ce que** la plaque-couvercle (14) est soudée ou collée sur le corps de base (13) et que les deux pièces sont constituées d'une matière thermoplastique.

6. Filtre interchangeable spin-on selon la revendication 5, **caractérisé en ce que**, en vue du centrage entre la plaque-couvercle (14) et le corps de base (13) au moins une rainure circulaire soit disposée entre les pièces.
